# EUROPÄISCHE PATENTANMELDUNG

(11) **EP 4 718 236 A1**
(43) Veröffentlichungstag der Anmeldung: **01.04.2026**
(21) Anmeldenummer: 25200725.7
(22) Anmeldetag: 08.09.2025
(51) Int. Cl.: G06F 8/51, G06F 11/3604, G06F 11/3668, G06F 8/74, G06F 8/75, G06F 8/76

(54) **TECHNIKEN ZUM ÜBERPRÜFEN VON ÜBERSETZTEM PROGRAMMCODE**

(30) Priorität: 25.09.2024 DE 102024209227
(71) Anmelder: Robert Bosch GmbH, 70442 Stuttgart (DE)
(72) Erfinder: Quante, Jochen, 71640 Ludwigsburg (DE); Woehrle, Matthias, 74321 Bietigheim-Bissingen (DE); Leinberger, Martin, 56073 Koblenz (DE); Flexeder, Andrea, 71729 Erdmannhausen (DE); Hecking-Harbusch, Jesko, 71229 Leonberg (DE)

(57) **Zusammenfassung**

Ein allgemeiner Aspekt der vorliegenden Offenbarung betrifft ein Verfahren zum Überprüfen von übersetztem Programmcode. Das Verfahren umfasst Zugreifen auf einen Original-Programmcode, der in einer ersten Programmiersprache abgefasst ist und Zugreifen auf einen übersetzten Programmcode, der in einer zweiten Programmiersprache abgefasst ist. Der übersetzte Programmierode ist mittels eines Maschinenlern-Systems aus dem Original-Programmcode übersetzt. Das Verfahren umfasst weiter Zugreifen auf ein oder mehrere Anpassungsfunktionen. Jede der ein oder mehreren Anpassungsfunktionen ist dazu ausgelegt ist, eine oder mehrere durch strukturelle Unterschiede zwischen der ersten und der zweiten Programmiersprache erzeugte Auswirkungen auf das Verhalten von in der ersten Programmiersprache und in der zweiten Programmiersprache abgefassten Programmcodes in einem Vergleich des Verhaltens der Programmcodes zu berücksichtigen. Das Verfahren umfasst zudem Durchführen eines Vergleichs des Verhaltens des Original-Programmcodes und des übersetzten Programmcodes unter Verwendung der ein oder mehreren Anpassungsfunktionen, um eine Äquivalenz des Original-Programmcodes und des übersetzten Programmcodes zu prüfen.

## Beschreibung

### Stand der Technik

Es existieren Verfahren zur automatisierten Übersetzung von Programmcode von einer Ursprungssprache oder Source-Sprache (in der vorliegenden Offenbarung auch als "erste Programmiersprache" bezeichnet) in eine Zielsprache oder Target-Sprache (in der vorliegenden Offenbarung auch als "zweite Programmiersprache" bezeichnet).

Zum Beispiel kann eine Übersetzung per Hand, bspw. durch einen Programmierer, vorgenommen werden. Dieses Vorgehen ist nicht effizient. Weiterhin finden sich im Stand der Technik dedizierte Code-Übersetzer. Diese sind jedoch nur für wenige Kombinationen von Source- und Target-Sprachen verfügbar. Zudem kann de facto unlesbarer Code erzeugt werden, weil die Übersetzung mechanistisch erfolgt. Dadurch kann die Wartbarkeit des Codes schwerwiegend beeinträchtigt werden. Schließlich besteht die Gefahr, dass der dedizierte Code-Übersetzer Idiome (also Code-Fragmente, die sprachspezifische Konstrukte enthalten) aus der Source-Sprache übernimmt und nicht an die Target-Sprache anpasst. In der am Zeitpunkt der Einreichung der vorliegenden Anmeldung nicht veröffentlichten Anmeldung DE 23 200 608.0 (angemeldet am 8.9.2023) werden Verfahren präsentiert zur automatisierten Programmcode-Übersetzung von einer Ursprungssprache in eine Zielsprache mittels eines Sprachmodells. Das Sprachmodell kann insbesondere ein Large-Language-Modell sein. Dabei kann mit verschiedenen Techniken eine Äquivalenz der beiden Programmcodes geprüft werden. Mit diesen Techniken können manche oder alle der vorstehend beschriebenen Probleme adressiert werden.

Dabei kann jedoch in manchen Fällen ein weiteres Problem auftreten. Die Übersetzung mittels eines Sprachmodells kann den übersetzten Code derart ändern, dass zwar das Verhalten des Programmcodes bei der Ausführung in einem technischen System gleichbleibt (z.B. implementiert der übersetzte Code eine Funktion wie gewünscht auf einem Steuergerät), in einem automatisierten Vergleich aber trotzdem unterschiedlich zu sein scheint. In einem illustrativen Beispiel existieren in der Programmiersprache des Original-Programmcodes gewisse Variablentypen nicht, die in der des Zielcodes zur Verfügung stehen. Eine Übersetzung eines Sprachmodells kann dann einen Variablentyp bei der Übersetzung ändern (was sogar wünschenswert sein kann). Ein automatisierter Vergleich der Ausgaben beider Programmcodes kann nun einen Unterschied erkennen, obwohl das Verhalten der beiden Programmcodes identisch ist: Z.B. kann das Ursprungsprogramm für eine bestimmte Eingabe den Ausgangswert "0" ausgeben, wenn eine Bedingung nicht erfüllt ist. Das Sprachmodell kann nun den nur in der Zielsprache zur Verfügung stehenden Variablentyp "Boolean" einsetzen. Der Ausgangswert wird dann zu "FALSE". Diese Übersetzung ist (semantisch) äquivalent. Trotzdem kann eine automatisierte Äquivalenzprüfung, die lediglich die Struktur der Ausgaben bewertet, beide Programmcodes als nicht äquivalent einstufen.

Die vorliegende Offenbarung nimmt sich dieses Problems an.

### Offenbarung der Erfindung

Ein erster allgemeiner Aspekt der vorliegenden Offenbarung betrifft ein Verfahren zum Überprüfen von übersetztem Programmcode. Das Verfahren umfasst Zugreifen auf einen Original-Programmcode, der in einer ersten Programmiersprache abgefasst ist und Zugreifen auf einen übersetzten Programmcode, der in einer zweiten Programmiersprache abgefasst ist. Der übersetzte Programmiercode ist mittels eines Maschinenlern-Systems aus dem Original-Programmcode übersetzt.

Das Verfahren umfasst weiter Zugreifen auf ein oder mehrere Anpassungsfunktionen. Jede der ein oder mehreren Anpassungsfunktionen ist dazu ausgelegt, eine oder mehrere durch strukturelle Unterschiede zwischen der ersten und der zweiten Programmiersprache erzeugte Auswirkungen auf das Verhalten von in der ersten Programmiersprache und in der zweiten Programmiersprache abgefassten Programmcodes in einem Vergleich des Verhaltens der Programmcodes zu berücksichtigen.

Das Verfahren umfasst zudem Durchführen eines Vergleichs des Verhaltens des Original-Programmcodes und des übersetzten Programmcodes unter Verwendung der ein oder mehreren Anpassungsfunktionen, um eine Äquivalenz des Original-Programmcodes und des übersetzten Programmcodes zu prüfen.

Ein zweiter allgemeiner Aspekt der vorliegenden Offenbarung betrifft eine Datenbank. Die Datenbank umfasst mehrere Anpassungsfunktionen. Jede der mehreren Anpassungsfunktionen ist dazu ausgelegt ist, eine oder mehrere durch strukturelle Unterschiede zwischen einer ersten und einer zweiten Programmiersprache erzeugte Auswirkungen auf das Verhalten von in der ersten Programmiersprache und in der zweiten Programmiersprache abgefassten Programmcodes, wobei der in der zweiten Programmiersprache abgefasste Programmcode durch Übersetzung mittels eines Maschinenlern-Systems aus dem in der ersten Programmiersprache abgefassten Programmcodes erzeugt ist, in einem Vergleich des Verhaltens der Programmcodes zu berücksichtigen. Die Datenbank umfasst weiterhin eine Schnittstelle, um die mehreren Anpassungsfunktionen für das Durchführen eines Vergleichs des Verhaltens von Original-Programmcodes in der ersten Programmiersprache und übersetzten Programmcodes in der zweiten Programmiersprache zur Verfügung zu stellen.

Ein dritter allgemeiner Aspekt der vorliegenden Offenbarung betrifft eine Umgebung, die dazu ausgelegt ist, eines der Verfahren gemäß dem ersten Aspekt auszuführen. Die Umgebung kann eine Test- und/oder Entwicklungsumgebung für technische Systeme sein.

Ein vierter allgemeiner Aspekt der vorliegenden Offenbarung betrifft ein Computer-Programm, das Anweisungen enthält, die, wenn sie von einem Computer-System ausgeführt werden, das Computer-System dazu bringen, ein Verfahren gemäß dem ersten Aspekt auszuführen.

Ein fünfter allgemeiner Aspekt der vorliegenden Offenbarung betrifft ein Computerlesbares Medium oder Signal, der/das das Computerprogramm gemäß dem vierten Aspekt speichert und/oder enthält.

Die Techniken des ersten, zweiten, dritten, vierten und fünften allgemeinen Aspekts können in manchen Situationen einen oder mehrere der folgenden Vorteile haben.

Erstens können mittels Techniken des ersten, zweiten, dritten, vierten und fünften allgemeinen Aspekts die Ergebnisse von Äquivalenz-Tests von maschinell übersetztem Code mit dem Original-Code verbessert werden. Das kann den Entwicklungsprozess von Software-Komponenten erheblich beschleunigen bzw. erleichtern. Insbesondere bei der Verwendung von Sprachmodellen wie Large-Language-Modellen kann die Code-Übersetzung wünschenswerte Anpassungen and die Struktur der Zielsprache vornehmen. Das kann - wie oben erläutert - für manche Ansätze der Prüfung der Äquivalenz zum Problem werden: Das Verhalten der beiden zu vergleichenden Programm-Codes kann unterschiedlich sein, z.B. in Bezug auf die Syntax von Ausgaben der zu vergleichenden Programm-Codes, obwohl das Verhalten des übersetzten Codes in der entsprechenden Umgebung bzw. dem entsprechenden technischen System genau dem des Original-Codes entspricht (d.h., die beiden Programmcodes sind semantisch äquivalent). Zum Beispiel wird in dem oben besprochenen Fall der übersetze Programmcode, der den Variablentyp "Boolean" einsetzt, sich in der entsprechenden (Ziel-)Umgebung gleich verhalten, wie der Original-Code in seiner Umgebung. Trotzdem kann ein automatisierter Äquivalenz-Vergleich den so übersetzten Code als nicht äquivalent einstufen. Das kann einen Entwicklungsprozess verzögern. In anderen Fällen ist denkbar, dass ein tatsächlicher Unterschied von der Äquivalenz-Prüfung nicht erkannt wird, da strukturelle Unterschiede zwischen den Programmiersprachen den Unterschied verdecken. Dann kann im Verhalten des übersetzten Codes in der entsprechenden Umgebung gerade nicht äquivalenter Code (semantisch nicht äquivalenter Code) als äquivalent eingestuft werden. Das kann wiederum den Entwicklungsprozess behindern oder verzögern oder im Extremfall zu Dysfunktionalitäten oder gar Sicherheitsrisiken in den entwickelten technischen Systemen führen.

Mittels der Anpassungsfunktionen der vorliegenden Offenbarung können die vorbeschriebenen Probleme in manchen Fällen verhindert werden. Jede der Anpassungsfunktionen ist dazu ausgelegt ist, eine oder mehrere durch strukturelle Unterschiede zwischen der ersten und der zweiten Programmiersprache erzeugten Auswirkungen auf das Verhalten von in der ersten Programmiersprache und in der zweiten Programmiersprache abgefassten Programmcodes in einem Vergleich des Verhaltens der Programmcodes zu berücksichtigen. Zum Beispiel kann eine Anpassungsfunktion in Betracht ziehen, dass in der Original-Sprache Wahrheitswerte numerisch und in der Zielsprache mittels des Variablentyps "Boolean" codiert werden. Die Anpassungsfunktion kann dann sicherstellen, dass ein z.B. zum Wahrheitswert "FALSE" gehöriger numerischer Ausgabewert (z.B. "0") als äquivalent zu der Ausgabe mit dem Wert "FALSE" in der Zielsprache erkannt wird. Das kann beispielsweise dadurch passieren, dass die Ausgaben des Programmcodes in der Ausgangssprache oder Zielsprache verändert werden oder aber die Anpassungsfunktion in eine Vergleichsfunktion (die ausgelegt ist zum Durchführen eines Vergleichs des Verhaltens des Original-Programmcodes und des übersetzten Programmcodes, um eine Äquivalenz des Original-Programmcodes und des übersetzten Programmcodes zu prüfen) eingebettet ist.

In der Folge kann in manchen Fällen erreicht werden, dass eine Äquivalenz aufgrund der relevanten Semantik der beiden Programm-Codes bestimmt wird und nicht aufgrund von nur durch strukturelle Unterschiede der Programmiersprachen verursachte Unterschiede.

Zweitens und als Folge des ersten Vorteils können die Techniken der vorliegenden Offenbarung dazu führen, dass übersetzter Programmcode in manchen Fällen sicherer und zuverlässiger automatisiert geprüft werden kann. Damit kann wiederum ein Entwicklungsprozess von technischen Systemen beschleunigt werden oder Fehlfunktionen und Sicherheitsrisiken vermieden werden.

Einige Begriffe werden in der vorliegenden Offenbarung in folgender Weise verwendet.

Ein Maschinenlern-System ist jedwedes System, in dem ein mittels maschinellen Lernens erzeugtes (d.h. trainiertes) Modell enthalten ist. Die Modelle der vorliegenden Offenbarung sind ausgelegt zum Übersetzen von Original-Programmcode, der in einer ersten Programmiersprache abgefasst ist in einen übersetzten Programmcode, der in einer zweiten Programmiersprache abgefasst ist. Die Modelle können explizit und/oder ausschließlich zu diesem Zweck trainiert sein. In anderen Beispielen können die Modelle multi-modale Modelle umfassen, die auch für andere Aufgaben trainiert sind. Insbesondere können die Modelle Sprachmodelle sein oder umfassen. Die Modelle können (aber müssen nicht) künstliche neuronale Netze umfassen (insbesondere tiefe künstliche neuronale Netze).

Das Maschinenlern-System kann ein generatives Maschinenlernmodell, bspw. ein generatives Foundation-Modell, umfassen. In manchen Beispielen kann das generative Maschinenlernmodell ein Modell zur Spracherzeugung umfassen. Zum Beispiel kann das generative Maschinenlernmodell ein Sprachmodell umfassen.

Ein "Sprachmodell" kann jedes generative Modell sein, dass mittels Techniken des maschinellen Lernens trainiert wurde zum Erzeugen von Sprache. Ein Sprachmodell kann insbesondere ein Large Language Model (LLM) sein oder ein anderes Transformer-Modell oder ein Codemodell als ein auf Code spezialisiertes Sprachmodell oder auch ein allgemeines Sprachmodell, dass auch Code erzeugen kann. Weiterhin umfasst sind Computersprachen, Programmcodes einer Recheneinheit wie einem Computer. Die Sprache des Modells kann nicht nur natürliche Sprachen, sondern auch künstliche Sprachen wie zum Beispiel Programmiersprachen beinhalten.

Zum Beispiel kann das Sprachmodell eines oder mehrere umfassen von CodeLlama, Llama, Mistral 7B, Ollama, CoPilot und/oder Sprachmodelle aus der GPT-Familie (zum Beispiel ChatGPT). In anderen Beispielen können Multi-modale Modelle wie beispielsweise Gemini, GPT4o eingesetzt werden.

Als "Programmcode" oder auch "Code" werden jedwede Anweisungen bezeichnet, die im Rahmen der Softwareentwicklung für eine bestimmtes Software-Komponente und/oder Hardware-Komponente oder einen Teil davon entstehen und die deren Funktionalität in einer bestimmten Programmiersprache beschreiben bzw. repräsentieren. Die vorliegende Offenbarung bezeichnet verschiedene Entwicklungsstufen und Implementierungsstufen einheitlich mit dem Begriff Programmcode, auch wenn sich die Natur dessen ändert (z.B. zu einer kompilierten Form bei der Implementierung).

Ein "System" oder "technisches System" der vorliegenden Offenbarung kann jedwede technische Vorrichtung sein, die zur Lösung einer konkreten technischen Aufgabe ausgelegt ist. Ein System kann Software- und oder Hardware-Komponenten umfassen (oder aus einer oder mehrerer dieser Komponenten bestehen oder basieren). Ein System kann eine Recheneinheit umfassen oder zur Ausführung auf einer Recheneinheit ausgelegt sein. Zum Beispiel kann ein System eine Recheneinheit (z.B. eine Steuereinheit) sein. Weitere konkrete Beispiele werden unten genannt.

Das Vergleichen eines Original-Programmcodes und eines übersetzten Programmcodes kann eines oder mehrere umfassen von: eine formale Prüfung der Äquivalenz des Verhaltens des Original-Programmcodes und des übersetzten Programmcodes. Zum Beispiel kann diese Prüfung der Äquivalenz umfassen: Bounded Model Checking, Tests in der Ursprungssprache, Test auf Contracts in der Ursprungssprache und/oder syntaktischen und stilistischen Tests, Fuzzing, Mutation der Eingänge des Test-Harness, Ableitung aus Contracts der Ursprungssprache und/oder der Zielsprache und/oder Ableitung aus einem Sprachmodell.

Ein "Test-Harness" bzw. Testrahmen umfasst eine Sammlung von Software-Komponenten und Testdaten, die zum systematischen automatisierten Testen eines Programmcodes unter verschiedenen Umgebungsbedingungen verwendet wird. Ein Test-Harness umfasst üblicherweise eine Testausführungs-Engine, welche für die Abarbeitung einer Testlogik verantwortlich ist, und eine Testdaten-Datenbank, welche Testskripte, Testprogramme und sonstige Testressourcen beinhalten kann. Der Test-Harness kann automatisiert erzeugt werden, indem zum Beispiel differenzierende Tests zu der Datenbank hinzugefügt werden. Der Start des Tests kann mit gegebenen oder vorgefertigten Tests aus der Test-Datenbank gestartet werden. Das System kann zudem Tests automatisch generieren.

Daten können hier Programm-Code inklusive Test-Fälle und -Harnesses plus zusätzlichen (natürlich-sprachlichen) Beschreibungen von der Funktionsweise bzw. Gültigkeitsbereichen sein. Beispielhaft wird hier C als Source Sprache und Rust als Target Sprache beschrieben, es sind andere Kombinationen möglich. Die Übersetzung von C in Rust ist interessant, da Rust Features im Bereich sicherheitskritischer Systeme bietet, aber viel Legacy-Code in anderen Sprachen, vor allem in C, existiert.

"Contracts" sind Bestandteil einer vertragsbasierten Programmierung oder eines Entwurfs gemäß Vertrag ("Design by contract"). Dies ist ein Konzept der Softwareentwicklung mit dem Ziel eines optimierten Zusammenspiels einzelner Programmmodule durch die Definition formaler Verträge zur Verwendung von Schnittstellen, die über deren statische Definition hinausgehen.

"Fuzzing" oder "Fuzz-Testing" ist der automatisierte Prozess des Sendens von zufällig generierten Eingaben von einem Fuzzer an ein Ziel oder Zielprogramm und des Beobachtens der Reaktion bzw. des Verhaltens des Ziels.

Ein "Fuzzer" oder "Fuzzing-Engine" ist ein System, das automatisch Eingaben generiert. Die Eingaben sind also nicht zwingend mit der zu testenden Software verbunden, und es muss auch keine Instrumentierung durchgeführt werden. Die Eingaben haben jedoch die Fähigkeit, Code zu instrumentieren, Testfälle zu erzeugen und zu testende Programme auszuführen. Bekannte Beispiele für Fuzzer sind afl und libfuzzer.

Ein "Testfall" ist eine bestimmte Eingabe und ein bestimmter Testdurchlauf aus einem Test Harness oder einem Fuzz-Test. Um die Reproduzierbarkeit zu gewährleisten, werden interessante Durchläufe (Finden neuer Codepfade oder Abstürze) gespeichert.

### Kurzbeschreibung der Figuren

**Fig. 1** illustriert in der linken Spalte schematisch ein Verfahren zum Überprüfen von übersetztem Programmcode gemäß der vorliegenden Offenbarung. **Fig. 1** illustriert in der rechten Spalte schematisch Verfahren zum Implementieren und Anwenden eines mittels der Verfahren zum Überprüfen von übersetztem Programmcode untersuchten Systems.
**Fig. 2** illustriert schematisch eine Struktur einer Umgebung zum Ausführen von Verfahren zum Überprüfen von übersetztem Programmcode gemäß der vorliegenden Offenbarung.

### Detaillierte Beschreibung

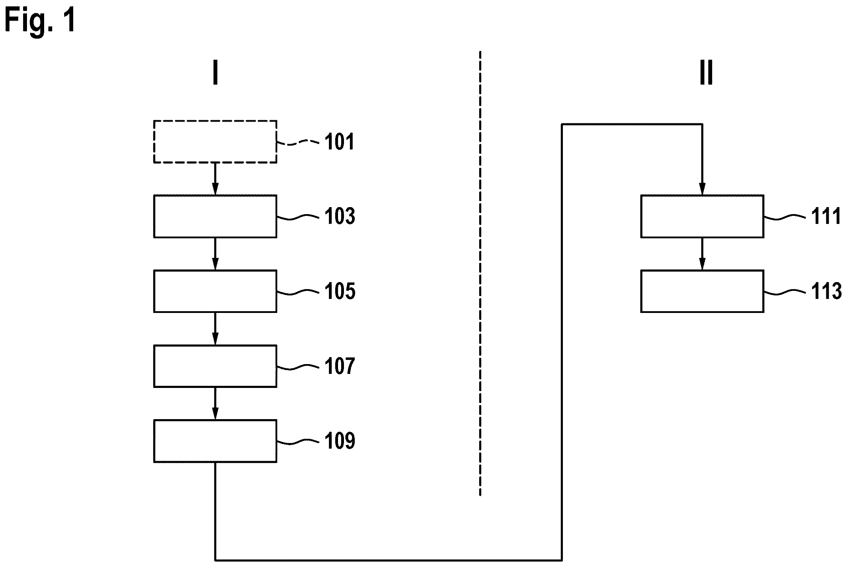

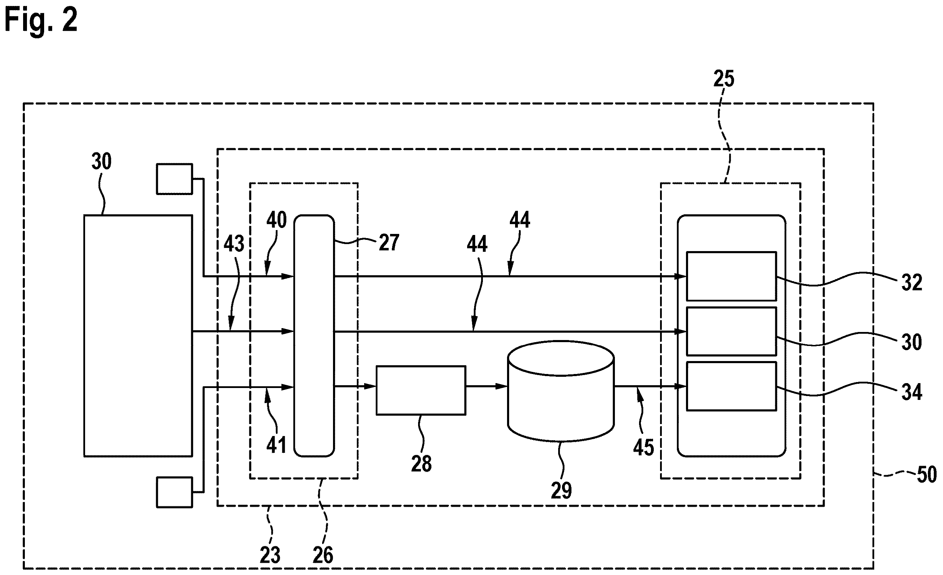

**Fig. 1** illustriert in der linken Spalte (I) schematisch ein Verfahren zum Überprüfen von übersetztem Programmcode gemäß der vorliegenden Offenbarung. **Fig. 2** illustriert schematisch eine Struktur einer Umgebung zum Ausführen von Verfahren zum Überprüfen von übersetztem Programmcode gemäß der vorliegenden Offenbarung.

Das Verfahren umfasst Zugreifen 103 auf einen Original-Programmcode 30, der in einer ersten Programmiersprache abgefasst ist und Zugreifen 105 auf einen übersetzten Programmcode 32, der in einer zweiten Programmiersprache abgefasst ist. Der übersetzte Programmiercode 32 ist mittels eines Maschinenlern-Systems 26 aus dem Original-Programmcode 30 übersetzt. Der Zugriff kann über jede geeignete Schnittstelle erfolgen. Die ersten und zweiten Programmiersprachen kann jede beliebige Kombination von Programmiersprachen (z.B. Rust nach C oder C nach Rust).

Das Verfahren umfasst weiter Zugreifen 107 auf ein oder mehrere Anpassungsfunktionen 34. Jede der ein oder mehreren Anpassungsfunktionen 34 ist dazu ausgelegt, eine oder mehrere durch strukturelle Unterschiede zwischen der ersten und der zweiten Programmiersprache erzeugten Auswirkungen auf das Verhalten (z.B. Unterscheide in dem Verhalten) von in der ersten Programmiersprache und in der zweiten Programmiersprache abgefassten Programmcodes in einem Vergleich des Verhaltens der Programmcodes zu berücksichtigen.

Das Berücksichtigen kann einen oder mehrere der folgenden Maßnahmen umfassen. In manchen Beispielen kann das Berücksichtigen nivellieren der Auswirkungen auf das Verhalten umfassen, z.B. Unterscheide in dem Verhalten (d.h. Beobachtungen des Verhaltens des Original-Programmcodes 30 und/oder des übersetzten Programmcodes 32 werden im Hinblick auf die strukturellen Unterschiede verarbeitet oder transformiert, so dass ein durch die strukturellen Unterschiede erzeugter Unterschied beseitigt bzw. ignoriert wird). Das Nivellieren der Auswirkungen kann in manchen Beispielen umfassen, dass nur durch Unterschiede in der Syntax und/oder den verfügbaren Objekten zwischen der ersten und der zweiten Programmiersprache erzeugte Unterschiede im Verhalten des Original-Programmcodes 30 und des übersetzten Programmcodes 32 beseitigt oder ignoriert werden, so dass die Verhalten des Original-Programmcodes 20 und des übersetzten Programmcodes 32 im Rahmen des Vergleichs als äquivalent erkannt werden.

In anderen Beispielen kann das Berücksichtigen Einführen von Auswirkungen auf das Verhalten (z.B. Unterscheide in dem Verhalten) umfassen, die aufgrund der strukturellen Unterschiede verlorengegangen sind (d.h. Beobachtungen des Verhaltens des Original-Programmcodes 30 und/oder des übersetzten Programmcodes 32 werden im Hinblick auf die strukturellen Unterschiede verarbeitet oder transformiert, so dass ein durch die strukturellen Unterschiede versteckter Unterschied erkennbar wird).

In manchen Beispielen wird die Auswirkung auf das Verhalten durch einen Unterschied in der Syntax und/oder den verfügbaren Objekten zwischen der ersten und der zweiten Programmiersprache erzeugt (d.h. der strukturelle Unterschied ist ein Unterschied in der Syntax und/oder den verfügbaren Objekten). Die verfügbaren Objekte können in manchen Beispielen verfügbare Variablentypen sein. Z.B. kann ein bestimmter Variablentyp in der ersten Programmiersprache verfügbar sein, nicht aber in der zweiten (oder umgekehrt). Das kann zu Folge haben, dass die Übersetzung mittels des Maschinenlern-Systems 26 in der ersten oder zweiten Programmiersprache eine Variable in dem jeweils nicht verfügbaren Variablentyp durch einen anderen Variablentyp ausdrückt. In der Folge kann ein Unterschied im Verhalten zwischen dem Original-Programmcode 30 und dem übersetzten Programmcode 32 auftreten. Die Anpassungsfunktionen 34 können dazu ausgelegt sein zu berücksichtigen, dass das Ausdrücken durch den anderen Variablentyp Auswirkungen auf das Verhalten der beiden Programm-Codes 30, 32 haben kann. Zum Beispiel kann eine Ausgabe des Original-Programmcodes 30 einen Wert der Variablen in einem ersten Variablentyp enthalten und die entsprechende Ausgabe des übersetzten Programmcodes 32 einen Wert derselben Variable in einem anderen Variablentyp. Dieser Unterschied kann berücksichtigt werden, in dem die Anpassungsfunktion die Ausgaben eines oder beider Programmcodes in einheitliche Werte umsetzt oder eine Vergleichsfunktion (die ausgelegt ist zum Durchführen eines Vergleichs des Verhaltens des Original-Programmcodes 30 und des übersetzten Programmcodes 32, um eine Äquivalenz des Original-Programmcodes 30 und des übersetzten Programmcodes 32 zu prüfen) so angepasst wird, dass die Äquivalenz der beiden Werte in den unterschiedlichen Variablentypen erkannt wird (dazu weiter unten mehr). In ähnliche Weise können auch andere Unterschiede in der Syntax und/oder zwischen den verfügbaren Objekten der ersten und zweiten Programmiersprachen behandelt werden.

In manchen Beispielen umfasst das Verhalten des Original-Programmcodes 30 und des übersetzten Programmcodes 32 das Erzeugen einer oder mehrerer Ausgaben in Antwort auf entsprechende Eingaben. In diesen Beispielen können die durch strukturellen Unterschiede zwischen der ersten und der zweiten Programmiersprache erzeugten Auswirkungen auf das Verhalten (z.B. Unterscheide in dem Verhalten) Unterschiede in den Ausgaben der Programmcodes umfassen (z.B., wenn die Programmcodes parallel einem Fuzzing unterzogen werden).

Die ein oder mehreren Anpassungsfunktionen 34 können in manchen Beispielen eine Ausgabe des Original-Programmcodes 30 und/oder des übersetzten Codes 32 so transformieren, dass sie mittels einer Vergleichsfunktion trotz der Auswirkungen der strukturellen Unterschiede auf Äquivalenz geprüft werden kann (d.h. die Vergleichsfunktion muss selbst nicht auf die strukturellen Unterscheide angepasst sein).

In anderen Beispielen kann die Anpassungsfunktion 34 in eine Vergleichsfunktion auf Äquivalenz eingebettet sein (d.h., die Vergleichsfunktion berücksichtigt die Auswirkungen der Unterschiede).

Die Anpassungsfunktionen 34 können dazu ausgelegt sein, eine semantische Gleichheit des Verhaltens des Original-Programmcodes 30 und des übersetzten Codes 32 herzustellen oder eine semantische Ungleichheit des Verhaltens herzustellen (bei durch strukturelle Unterschiede erzeugten Unterschieden im Verhalten bzw. bei durch strukturelle Unterschiede überdeckten Unterschieden im Verhalten).

Die Anpassungsfunktionen 34 können in jeder geeigneten Weise verkörpert sein. Z.B. als Objekte oder Funktionen in einer Bibliothek, als eigene Programme und/oder eingebettet in einer Umgebung zum Testen von Programmcode. Die Anpassungsfunktionen 34 können in einer Datenbank bereitgestellt sein und selektiv für den jeweils anstehenden Vergleich ausgewählt werden (dazu unten mehr).

Das Verfahren umfasst zudem Durchführen eines Vergleichs 109 des Verhaltens des Original-Programmcodes 30 und des übersetzten Programmcodes 32 unter Verwendung der ein oder mehreren Anpassungsfunktionen 34, um eine Äquivalenz des Original-Programmcodes und des übersetzten Programmcodes zu prüfen.

In manchen Beispielen kann Durchführen eines Vergleichs 109 des Verhaltens Erzeugen von Eingaben und Vergleichen von Verhalten des Original-Programmcodes 30 und des übersetzten Programmcodes 32 umfassen. Das Verhalten kann in manchen Beispielen das Erzeugen von Ausgaben umfassen.

Die Techniken der vorliegenden Offenbarung werden im Folgenden anhand eines konkreten Beispiels illustriert. In dem vorliegenden Beispiel ist die erste Programmiersprache "Embedded C" und die zweite Programmiersprache ist "Python". Eine Funktion "CheckGapPos" wurde mittels eines Maschinenlern-Systems von Embedded C nach Python übersetzt. Nun soll die Äquivalenz des übersetzten Codes mit dem Original-Programmcode geprüft werden. Die Funktion "CheckGapPos" gibt einen Wahrheitswert zurück. Da es im Embedded C Code den Datentyp "Boolean" nicht gibt, gibt die Originalfunktion 0 oder 255 zurück. In dem übersetzten Python Code werden "TRUE" oder "FALSE" zurückgegeben, da der Datentyp "Boolean" vorhanden ist.

Eine bestehende Vergleichsfunktion zum Prüfen der Äquivalenz der beiden Programmcodes kann nun folgendermaßen aussehen:

```
@given(phiEvent1=st.integers(-2147483648, 2147483647),
phiEvent2=st.integers(-2147483648, 2147483647),
phiNxtGap=st.integers(-2147483648, 2147483647))
def translation(phiEvent1, phiEvent2, phiNxtGap):
assert c_code.CheckGapPos(phiEvent1, phiEvent2,
phiNxtGap) == CheckGapPos(phiEventl, phiEvent2,
phiNxtGap)
```

Diese Vergleichsfunktion würde keine Äquivalenz finden, da der Vergleich die Ausgaben "TRUE / FALSE" als ungleich zu den Ausgaben "1 / 0" erachten würde. Eine in die Vergleichsfunktion eingebettete Anpassungsfunktion gemäß der vorliegenden Offenbarung kann nun wie folgt aussehen:

```
def equiv(valuel, value2):
x = False if valuel == 0 ∥ valuel == False else True
y = False if value2 == 0 ∥ value2 == False else True
return x == y
```

Wie ersichtlich, berücksichtigt die Anpassungsfunktion die unterschiedlichen Rückgabewerte aufgrund der unterschiedlichen Variablentypen. Dies so angepasste Vergleichsfunktion würde eine Äquivalenz finden, da der Vergleich die Ausgaben "true / false" als äquivalent zu den Ausgaben "1 / 0" erachten würde.

In manchen Beispielen kann das Durchführend des Vergleichs paralleles Fuzzing des Original-Programmcodes 30 und des übersetzten Programmcodes 32 umfassen.

Das kann unter Verwendung eines Test-Harness erfolgen, wobei der Test-Harness automatisiert erzeugt werden kann. Alternativ kann auch ein bereits existierender Test Harness verwendet werden. Das Vergleichen des Original-Programmcodes 30 und des übersetzten Programmcodes 32 mit dem Test-Harness kann zum Beispiel mit einem oder mehreren vorgegebenen oder vorgefertigten Tests beginnen. Diese initialen Tests können zu den Codes gehören oder mit den Codes bereitgestellt werden. Die Tests können in einer Testdatenbank hinterlegt sein. Differenzierende Tests können dann zu der Testdatenbank hinzugefügt werden.

Ein automatischer Aufbau eines Test-Harnesses, der einen Original-Programmcode 30 und des übersetzten Programmcode 32 vergleicht , kann die folgenden Schritte oder Vorgaben umfassen:
- Bei einem fehlgeschlagenen Vergleich auf gegebenen Tests wird diese Variante der Übersetzung verworfen.
- Bei einem fehlgeschlagenen Vergleich auf automatisch generierten Tests wird diese Variante der Übersetzung verworfen. Die oder der fehlgeschlagene Test wird übernommen, da dieser offensichtlich differenzierend ist. Das Übernehmen kann ein Speichern in der Testdatenbank umfassen. Automatisch generierte Tests können entstehen aus Fuzzing, Mutation der Eingänge, Ableitung aus Contracts und gegebenenfalls aus einem Sprachmodell.
- Bei einem fehlgeschlagenen Vergleich auf differenzierenden Tests wird diese Variante verworfen.

Optional können statische Prüfungen parallel zu den Tests mit dem Test-Harness durchgeführt werden.
- Contracts werden entweder vorgegeben oder aus dem Systemumfeld extrahiert.
- Im Fall von Rust können Contracts auch durch den Compiler bereitgestellt werden, in anderen Sprachen z.B. auch durch Linter etc.
- Bounded model checking und/oder abstrakte Interpretation, realisiert in kommerziellen Tools wie z.B. Astrée oder Open-Source-tools wie z.B. CBMC.
- Automatischer Aufbau eines Bounded Model Checking Setups, das Ziel-Programmcode statisch gegen gegebene Contracts vergleicht.
- Automatischer Aufbau eines Abstract Interpretation Setups, das Ziel-Programmcode statisch gegen gegebene Contracts vergleicht.
- Automatischer Aufbau eines Bounded Model Checking Setups, das Ursprung-Programmcode und Ziel-Programmcode auf funktionale Gleichheit prüft.

In manchen Beispielen umfasst das Maschinenlern-System 27 ein Sprachmodel 26, insbesondere ein Large-Language-Modell, das auf eine Übersetzung von Programmcode von der ersten Programmiersprache in die zweite Programmiersprache ausgelegt ist. Weitere Aspekte zu den einsetzbaren Modellen sind weiter oben zu finden.

In manchen Beispielen umfasst das Verfahren Übersetzen des Original-Programmcodes 30 in den übersetzen Programmcode 32 mittels des Maschinenlern-Systems 26. In manchen Beispielen umfasst das Maschinenlern-System 26 ein Sprachmodell 27, insbesondere ein Large-Language-Modell, das auf eine Übersetzung von Programmcode von der ersten Programmiersprache in die zweite Programmiersprache ausgelegt ist. Weitere Aspekte zu den einsetzbaren Modellen sind weiter oben zu finden.

**Fig. 2** illustriert schematisch eine Struktur einer Umgebung 23 zum Ausführen von Verfahren zum Überprüfen von übersetztem Programmcode gemäß der vorliegenden Offenbarung.

In manchen Beispielen kann die Umgebung 23 zum Ausführen von Verfahren zum Überprüfen von übersetztem Programmcode gemäß der vorliegenden Offenbarung in eine Test- und/oder Entwicklungsumgebung 50 für technische Systeme (z.B. Software-Komponenten) eingebettet sein.

Die Umgebung 23 kann ein Maschinenlern-System 26 (das z.B. ein Sprachmodell 27 oder ein anderes Modell zum Übersetzen von Programmcode der vorliegenden Offenbarung umfassen kann) umfassen.

In manchen Beispielen kann die Umgebung 23 eine Datenbank 29 umfassen, in der mehrere Anpassungsfunktionen 34 der vorliegenden Offenbarung abgelegt sind.

Die Umgebung 23 kann weiterhin eine Schnittstelle 43 umfassen, um einen Original-Programmcode 30 an das Maschinenlern-System 26 zu übergeben zur Übersetzung des Original-Programmcode 30 in einen übersetzten Programmcode 32.

Die Umgebung 23 kann weiterhin eine Bewertungs-Teilumgebung 25 umfassen, die zum Ausführen der Verfahren zum Bewerten von übersetztem Programmcode 32 gemäß den Techniken der vorliegenden Offenbarung ausgelegt ist. Zu diesem Zweck kann die Bewertungs-Teilumgebung 25 Schnittstellen 44 aufweisen, um Original-Programmcode 32, zugehörigen übersetzten Programmcode 30 und ein oder mehrere Anpassungsfunktionen 34 (in manchen Beispielen als integriert oder verbunden mit Vergleichsfunktionen zum Vergleichen des Verhaltens des Original-Programmcodes und des übersetzten Programmcodes unter Verwendung der ein oder mehreren Anpassungsfunktionen) zu empfangen. Die Anpassungsfunktionen 34 oder die Vergleichsfunktionen können aus der Datenbank 29 empfangen werden.

Die Umgebung 23 (z.B. das Maschinenlern-System 26) kann in manchen Beispielen eine Schnittstelle 40 für das Empfangen von Anfragen zum Übersetzen des Original-Programmcodes empfangen (z.B. einen Prompt für ein Sprachmodell). Die Anfragen können in manchen Beispielen in der Test- und/oder Entwicklungsumgebung 50 erzeugt werden (z.B. im Rahmen eines automatisierten Tests).

Die vorliegende Erfindung betrifft auch eine Datenbank 23, die mehrere Anpassungsfunktionen 34 umfasst oder enthält (z.B., mehr als 1000 oder mehr als 1.000.000). Jede der mehreren Anpassungsfunktionen 34 ist dazu ausgelegt ist, eine oder mehrere durch strukturelle Unterschiede zwischen einer ersten und einer zweiten Programmiersprache erzeugte Auswirkungen auf das Verhalten von in der ersten Programmiersprache und in der zweiten Programmiersprache abgefassten Programmcodes, wobei der in der zweiten Programmiersprache abgefasste Programmcode durch Übersetzung mittels eines Maschinenlern-Systems aus dem in der ersten Programmiersprache abgefassten Programmcodes erzeugt ist, in einem Vergleich des Verhaltens der Programmcodes zu berücksichtigen. Die Anpassungsfunktionen 34 können eine oder mehrere der oben beschriebenen Eigenschaften haben. In manchen Fällen können die Anpassungsfunktionen 34 in Vergleichsfunktionen eingebettet sein (die ausgelegt ist zum Durchführen eines Vergleichs des Verhaltens des Original-Programmcodes 30 und des übersetzten Programmcodes 32, um eine Äquivalenz des Original-Programmcodes und des übersetzten Programmcodes zu prüfen).

Die Datenbank 23 umfasst weiterhin eine Schnittstelle 45, um die mehreren Anpassungsfunktionen 34 für das Durchführen eines Vergleichs des Verhaltens von Original-Programmcodes 30 in der ersten Programmiersprache und übersetzten Programmcodes 32 in der zweiten Programmiersprache zur Verfügung zu stellen.

In manchen Beispielen können die Verfahren der vorliegenden Offenbarung weiter umfassen Auswählen der ein oder mehrere Anpassungsfunktionen 34 aus einer Datenbank von Anpassungsfunktionen (z.B. der Datenbank 23 in Fig. 2). Das Auswählen kann umfassen Extrahieren von für die Auswahl der ein oder mehreren Anpassungsfunktionen benötigter Information 28 mittels des Maschinenlern-Systems (z.B. der mittels des Maschinenlern-Systems 26 in Fig. 2), das zur Übersetzung des Original-Programmcodes 30 in den übersetzen Programmcode 32 verwendet und Auswählen der ein oder mehreren Anpassungsfunktionen 34 basierend auf der extrahierten Information 28. Die Informationen 28 können eines oder mehrere umfassen von der Information zu der ersten Programmiersprache (d.h. der Ursprungsprache), Informationen zur zweiten Programmiersprache (d.h., der Zielsprache), Informationen zu dem Original-Programmcode 30 (Funktion oder beinhaltete Code-Strukturen), Informationen zu dem übersetzten Programmcode 32 (Funktion oder beinhaltete Code-Strukturen), Informationen zu dem eingesetzten Maschinenlern-System 26, Informationen zu dem konkreten Übersetzungsvorgang, oder weitere Informationen.

In der Umgebung 23 der **Fig. 2** kann die Umgebung 23 (z.B. das Maschinenlern-System 26) in manchen Beispielen eine Schnittstelle 41 für das Empfangen von Anfragen zum Extrahieren von für die Auswahl der ein oder mehreren Anpassungsfunktionen 34 benötigter Information 28. Die Anfragen können in manchen Beispielen in der Test- und/oder Entwicklungsumgebung 50 erzeugt werden (z.B. im Rahmen eines automatisierten Tests).

In manchen Beispielen können die Verfahren der vorliegenden Offenbarung automatisiert ausgeführt werden.

Die Verfahren der vorliegenden Offenbarung können im Allgemeinen im Rahmen eines Entwicklungsprozesses durchgeführt werden.

Die vorliegende Offenbarung betrifft auch ein Durchführen einer der Techniken zum Bewerten von übersetztem Programmcode und Implementieren 111 des übersetzten Programmcodes in einem bestimmten technischen System nach Durchführung der Techniken zum Bewerten von übersetztem Programmcode (z.B., wenn eine Prüfung eine Äquivalenz mit dem Original-Programmcode ergeben hat). Die Implementierung kann dabei je nach Art des bestimmten technischen Systems eine Herstellung einer Instanz des bestimmten Systems, ein Aufspielen einer Software, um eine Instanz des bestimmten Systems zu erzeugen oder ähnliche Implementierungsschritte beinhalten. Konkrete Systeme werden weiter unten beschrieben.

Die Techniken der vorliegenden Offenbarung können in jedem Stadium eines Produktlebenszyklus eines den übersetzten Programmcode enthaltenden Produkts durchgeführt werden. Die Verfahren der vorliegenden Offenbarung können in manchen Beispielen iterativ durchgeführt werden (d.h. die Verfahren werden mehrfach hintereinander ausgeführt).

Die vorliegende Offenbarung betrifft auch ein Verfahren des Verwendens 113 eines ein den übersetzten Programmcode enthaltenden bestimmten Systems nach den Schritten der Techniken der vorliegenden Offenbarung.

In Beispielen kann das bestimmte System zur Regelung und/oder Steuerung und/oder Überwachung eines technischen Systems ausgelegt sein.

In Beispielen kann das Verfahren das Verwenden des bestimmten Systems zur Steuerung, Reglung und/oder Überwachung einer Fahrzeugfunktion, einer Roboterfunktion, einer Gebäudeautomatisierungsfunktion, Elektrowerkzeugautomatisierungsfunktion, und/oder einer Haushaltsgeräteautomatisierungsfunktion umfassen.

In einem Beispiel kann das bestimmte System zur Anordnung in einem Fahrzeug ausgelegt sein, und/oder zur Steuerung einer Fahrzeugfunktion ausgelegt sein (insbesondere zur Steuerung einer Fahrfunktion). Zum Beispiel kann die Fahrzeugfunktion eine Funktion zum autonomen und/oder assistierten Fahren sein. In manchen Beispielen kann das bestimmte System zur Ausführung auf einem Computersystem eines Fahrzeugs (bspw. eines autonom, hochautomatisiert oder assistiert fahrenden Fahrzeugs) ausgelegt sein. Zum Beispiel kann das Computersystem lokal in dem Fahrzeug implementiert sein oder (zumindest teilweise) in einem Backend, das mit dem Fahrzeug kommunikativ verbunden ist, implementiert sein. Beispielsweise kann das bestimmte System ein Steuergerät umfassen oder sein. In manchen Beispielen kann das Fahrzeug ein Computersystem mit einer Kommunikationsschnittstelle umfassen, die Kommunikation mit einem Backend ermöglicht. Beispielsweise kann in diesem Backend das bestimmte System ausgeführt werden. In einem Beispiel kann das bestimmte System ein System zur Querführung und/oder Längsführung des Fahrzeugs sein. In Beispielen kann das bestimmte System Geschwindigkeitsinformationen oder Distanzinformationen als Eingangsdaten empfangen. Alternativ oder zusätzlich können die Eingangsdaten eine relative Geschwindigkeit und/oder eine Distanz zwischen einem ersten Fahrzeug, einem zweiten Fahrzeug, einem Menschen und/oder einem ortsfesten Objekt umfassen. Alternativ oder zusätzlich können die Eingangsdaten Variablen umfassen, die mindestens auf einem von einem Lenkwinkel, einem Ausrichtungswinkel, einer Gierrate, einem Schlupfwinkel, und/oder einem seitlichen Fehler basieren. Alternativ oder zusätzlich können die Eingangsdaten Informationen aus einem Netzwerk umfassen, wie beispielsweise Bewegungs- und/oder Richtungsinformationen von anderen Fahrzeugen. In Beispielen können diese Informationen mittels Fahrzeug-zu-Fahrzeug-Kommunikation (V2V-Kommunikation) oder mittels eines Backends (V2X-Kommunikation) bereitgestellt werden. Alternativ oder zusätzlich können die Eingangsdaten eine Lenkgeschwindigkeit oder Sollvorgaben für Beschleunigungs- und/oder Bremsvorgänge umfassen.

In Beispielen kann das bestimmte System zur Anordnung in einer Antriebssteuerung oder eine Antriebseinheit ausgelegt sein und/oder zur Regelung einer motorbezogenen Funktion dienen (insbesondere zur Motorregelung). In Beispielen kann das bestimmte System zur Anordnung in einer Antriebsregelung einer elektrischen Maschine angeordnet sein. Beispielsweise kann der Zustandsvektor des Zustandsraummodells Variablen enthalten, die mindestens auf einem von einem Steuerungssignal, einem Betriebsmodus oder einer Leistungseinstellung der elektrischen Maschine basieren.

Die vorliegende Offenbarung betrifft auch das Verwenden des bestimmten Systems zum Steuern und/oder Regeln und/oder Überwachen eines Roboters.

In anderen Beispielen kann das bestimmte System in einem Roboter angeordnet sein, und/oder zur Steuerung einer Roboterfunktion ausgelegt sein (insbesondere zur Steuerung einer Bewegungsfunktion eines Roboters). Zum Beispiel kann das bestimmte System ein System zur Querführung und/oder Längsführung des Roboters sein. In manchen Beispielen kann das bestimmte System auf einem Computersystem eines Roboters ausgeführt werden. Zum Beispiel kann das Computersystem lokal in dem Roboter implementiert sein oder (zumindest teilweise) in einem Backend, das mit dem Roboter kommunikativ verbunden ist, implementiert sein. In manchen Beispielen kann das bestimmte System in einem Backend ausgeführt werden. In Beispielen kann das bestimmte System Geschwindigkeitsinformationen oder Distanzinformationen als Eingangsdaten erhalten. Alternativ oder zusätzlich können die Eingangsdaten eine relative Geschwindigkeit und/oder eine Distanz zwischen einem ersten Roboter, einem Menschen, einer weiteren mobilen Vorrichtung und/oder einem ortsfesten Objekt umfassen. Alternativ oder zusätzlich können die Eingangsdaten Variablen umfassen, die mindestens auf einem von einem Lenkwinkel, einem Ausrichtungswinkel, einer Gierrate, einem Schlupfwinkel, und/oder einem seitlichen Fehler basieren. Alternativ oder zusätzlich können die Eingangsdaten Informationen aus einem Netzwerk umfassen, wie beispielsweise Bewegungs- und/oder Richtungsinformationen von anderen Robotern, mobilen Vorrichtung und/oder Menschen. In Beispielen können diese Informationen mittels direkter Kommunikation oder mittels eines Backends bereitgestellt werden. In einem Beispiel kann ein Eingangsvektor eine Lenkgeschwindigkeit oder Sollvorgaben für Beschleunigungs- und/oder Bremsvorgänge umfassen.

Die vorliegende Offenbarung betrifft auch das Verwenden des bestimmten Systems zum Steuern und/oder Regeln und/oder Überwachen von Funktionen in der Gebäudeautomatisierung.

In einem Beispiel kann das bestimmte System zur Anordnung in einem Gebäude ausgelegt sein und/oder zur Steuerung und/oder Regelung und/oder Überwachung von Gebäudefunktionen dienen (insbesondere zur Steuerung und/oder Regelung von Gebäudeautomatisierungsfunktionen). Zum Beispiel kann die Gebäudefunktion eine Funktion zum Regeln von Raumtemperatur, Beleuchtung und/oder Sicherheitseinrichtung sein.

Offenbart wird weiterhin ein Computer-System, das dafür ausgelegt ist, die Verfahren zum Bewerten von übersetztem Programmcode auszuführen (oder einen oder mehrere der vorgelagerten oder nachgelegten Verfahren). Das Computer-System kann einen Prozessor und/oder einen Arbeitsspeicher umfassen. Das Computer-System kann netzwerkbasiert und/oder verteilt sein.

Offenbart wird weiterhin ein Computer-Programm, das Anweisungen enthält, die, wenn sie von einem Computer-System ausgeführt werden, das Computer-System dazu bringen, die Verfahren zum Bewerten von übersetztem Programmcode auszuführen (oder einen oder mehrere der vorgelagerten oder nachgelegten Verfahren). Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

## Patentansprüche

1. Verfahren zum Bewerten von übersetztem Programmcode, umfassend:
Zugreifen (103) auf einen Original-Programmcode (31), der in einer ersten Programmiersprache abgefasst ist;
Zugreifen (105) auf einen übersetzten Programmcode (30), der in einer zweiten Programmiersprache abgefasst ist,
wobei der übersetzte Programmcode mittels eines Maschinenlern-Systems (26) aus dem Original-Programmcode übersetzt ist;
Zugreifen (107) auf ein oder mehrere Anpassungsfunktionen (34),
wobei jede der ein oder mehreren Anpassungsfunktionen (34) dazu ausgelegt ist, eine oder mehrere durch strukturelle Unterschiede zwischen der ersten und der zweiten Programmiersprache erzeugte Auswirkungen auf das Verhalten von in der ersten Programmiersprache und in der zweiten Programmiersprache abgefassten Programmcodes in einem Vergleich des Verhaltens der Programmcodes zu berücksichtigen; und
Durchführen eines Vergleichs (109) des Verhaltens des Original-Programmcodes (30) und des übersetzten Programmcodes (32) unter Verwendung der ein oder mehreren Anpassungsfunktionen (34), um eine Äquivalenz des Original-Programmcodes (30) und des übersetzten Programmcodes (32) zu prüfen.

2. Verfahren gemäß Anspruch 1, wobei die eine oder mehrere Auswirkungen auf das Verhalten durch einen Unterschied in der Syntax und/oder den verfügbaren Objekten zwischen der ersten und der zweiten Programmiersprache erzeugt werden.

3. Verfahren gemäß einem der vorangehenden Ansprüche 1 oder 2, wobei berücksichtigen von einen oder mehrere Auswirkungen umfasst, dass nur durch Unterschiede in der Syntax und/oder den verfügbaren Objekten zwischen der ersten und der zweiten Programmiersprache erzeugte Unterschiede im Verhalten des Original-Programmcodes (30) und des übersetzten Programmcodes (32) beseitigt oder ignoriert werden, so dass die Verhalten des Original-Programmcodes (30) und des übersetzten Programmcodes (32) im Rahmen des Vergleichs als äquivalent erkannt werden.

4. Verfahren gemäß einem der vorangehenden Ansprüche 1 bis 3, wobei das Verhalten des Original-Programmcodes (30) und des übersetzten Programmcodes (32) das Erzeugen einer oder mehrerer Ausgaben in Antwort auf entsprechende Eingaben umfasst.

5. Verfahren gemäß einem der Ansprüche 1 bis 4,
wobei die ein oder mehrere Anpassungsfunktionen (34) eine Ausgabe des Original-Programmcodes (30) und/oder des übersetzten Codes (32) so transformiert, dass sie mittels einer Vergleichsfunktion auf Äquivalenz geprüft werden kann, oder
wobei die Anpassungsfunktion (34) in eine Vergleichsfunktion auf Äquivalenz eingebettet ist.

6. Verfahren gemäß einem der Ansprüche 1 bis 5, wobei Durchführen eines Vergleichs des Verhaltens Erzeugen von Eingaben und Vergleichen von Verhalten, insbesondere Ausgaben, des Original-Programmcodes (30) und des übersetzten Programmcodes (32) umfasst,
insbesondere durch paralleles Fuzzing des Original-Programmcodes (30) und des übersetzten Programmcodes (32).

7. Verfahren gemäß einem der vorangehenden Ansprüche 1 bis 6, wobei das Maschinenlern-System (26) ein Sprachmodell (27) umfasst, insbesondere ein Large-Language-Modell, das auf eine Übersetzung von Programmcode von der ersten Programmiersprache in die zweite Programmiersprache ausgelegt ist.

8. Verfahren gemäß einem der vorangehenden Ansprüche 1 bis 7, weiter umfassend:
Übersetzen (101) des Original-Programmcodes (30) in den übersetzen Programmcode (32) mittels des Maschinenlern-Systems (26).

9. Verfahren gemäß einem der Ansprüche 1 bis 8, weiter umfassend:
Auswählen der ein oder mehrere Anpassungsfunktionen (34) aus einer Datenbank von Anpassungsfunktionen (29).

10. Verfahren gemäß Anspruch 9, wobei Auswählen umfasst:
Extrahieren von für die Auswahl der ein oder mehreren Anpassungsfunktionen (34) benötigter Information (28) mittels des Maschinenlern-Systems (26), das zur Übersetzung des Original-Programmcodes (30) in den übersetzen Programmcode (32) verwendet, und Auswählen der ein oder mehreren Anpassungsfunktionen (34) basierend auf der extrahierten Information (28).

11. Verfahren gemäß einem der Ansprüche 1 bis 10, wobei das Verfahren automatisiert ausgeführt wird.

12. Datenbank (23), umfassend:
mehrere Anpassungsfunktionen (34),
wobei jede der ein oder mehreren Anpassungsfunktionen (34) dazu ausgelegt ist, eine oder mehrere durch strukturelle Unterschiede zwischen einer ersten und einer zweiten Programmiersprache erzeugte Auswirkungen auf das Verhalten von in der ersten Programmiersprache und in der zweiten Programmiersprache abgefassten Programmcodes (30, 32), wobei der in der zweiten Programmiersprache abgefasste Programmcode durch Übersetzung mittels eines Maschinenlern-Systems (26) aus dem in der ersten Programmiersprache abgefassten Programmcodes erzeugt ist, in einem Vergleich des Verhaltens der Programmcodes zu berücksichtigen; und
eine Schnittstelle, um die mehreren Anpassungsfunktionen für das Durchführen eines Vergleichs des Verhaltens von Original-Programmcodes (30) in der ersten Programmiersprache und übersetzten Programmcodes (32) in der zweiten Programmiersprache zur Verfügung zu stellen.

13. Umgebung (23), die dazu ausgelegt ist, eines der Verfahren gemäß der vorliegenden Offenbarung auszuführen, insbesondere wobei die Umgebung eine Test- und/oder Entwicklungsumgebung für technische Systeme ist.

14. Computer-Programm, das Anweisungen enthält, die, wenn sie von einem Computer-System ausgeführt werden, das Computer-System dazu bringen, ein Verfahren gemäß einem der Ansprüche 1 bis 11 auszuführen.

15. Computerlesbares Medium oder Signal, der/das das Computerprogramm gemäß Anspruch 14 speichert und/oder enthält.
